# EUROPÄISCHE PATENTSCHRIFT

(11) **EP 2 821 783 B1**
(45) Veröffentlichungstag und Bekanntmachung des Hinweises auf die Patenterteilung: **19.06.2019**
(21) Anmeldenummer: 14174969.7
(22) Anmeldetag: 30.06.2014
(51) Int. Cl.: G01N 29/06, G01N 29/26

(54) **Vorrichtung und Verfahren zur Ermittlung von Materialfehlern in rotationssymmetrischen Prüfkörpern mittels Ultraschall**
Device and method for determining material faults in rotationally symmetrical test samples by means of ultrasound
Dispositif et procédé de détermination de défauts matériels dans des éprouvettes à symétrie de révolution au moyen d'ultrasons

(30) Priorität: 01.07.2013 DE 102013106901
(43) Veröffentlichungstag der Anmeldung: 07.01.2015
(73) Patentinhaber: GE Sensing & Inspection Technologies GmbH, 50354 Hürth (DE); Bundesrepublik Deutschland, vertreten durch das Bundesministerium für Wirtschaft und Technologie, 12205 Berlin (DE)
(72) Erfinder: Heckel, Thomas, 14532 Kleinmachnow (DE); Völz, Uwe, 01458 Ottendorf-Okrilla (DE); Falter, Stephan, 52152 Simmerath (DE)
(74) Vertreter: Patentanwälte Bauer Vorberg Kayser

(56) Entgegenhaltungen:
- JP-A- 2009 281 731
- US-A1- 2003 089 171
- BULAVINOV A ET AL: "Echtzeit-3D-Bildgebung mittels der Getakteten Gruppenstrahlertechnik fuer Ultraschallpruefanwendungen", ZFP IN FORSCHUNG, ENTWICKLUNG UND ANWENDUNG: MÜNSTER, 18.-20. MAI 2009; DGZFP-JAHRESTAGUNG 2009 ZERSTÖRUNGSFREIE MATERIALPRÜFUNG / DGZFP, DEUTSCHE GESELLSCHAFT FÜR ZERSTÖRUNGSFREIE PRÜFUNG E.V,, 18. Mai 2009 (2009-05-18), Seiten 1-12, XP009175733, ISBN: 978-3-940283-16-0

## Beschreibung

Die vorliegende Erfindung betrifft Verfahren zur Ermittlung von Materialfehlern in Prüfkörpern mittels Ultraschall, insbesondere eine Vorrichtung zur Erzeugung, Verarbeitung und Darstellung von Messwerten zum Nachweis einer Rissbildung in Antriebs- und Laufwellen, wie beispielsweise in Radsatzwellen von Schienenfahrzeugen.

Bekannte Ultraschallmessverfahren zur Untersuchung von Schienenfahrzeugwellen auf betriebsbedingte Rissbildung bedienen sich einer geometrieabhängigen Laufzeitblende und einer Schwellwertbetrachtung der Amplituden betreffender Prüfsignale. In den Ultraschallmessverfahren treten neben den Anzeigen, die von Materialfehlern verursacht werden, ebenso geometriebedingte sogenannte Formanzeigen auf. Diese Formanzeigen schränken das Auflösungsvermögen bekannter Vorrichtungen und Verfahren auf Grund der Überlagerung der interessierenden materialbedingten Anzeigen durch geometriebedingte Anzeigen ein.

Vor diesem Hintergrund wird gemäß Anspruch 1 ein Verfahren zur zerstörungsfreien Prüfung, gemäß Anspruch 6 eine Vorrichtung dafür, gemäß Anspruch 9 die Verwendung eines Gruppenstrahlerprüfkopfes und gemäß Anspruch 10 ein Verfahren zur automatischen Ultraschallprüfung von rotationssymmetrischen Prüfkörpern vorgeschlagen. Weitere vorteilhafte Ausgestaltungen, Einzelheiten und Merkmale der vorliegenden Erfindung ergeben sich aus den Unteransprüchen, der Beschreibung sowie den Ausführungsbeispielen.

Bei der zerstörungsfreien Überprüfung von rotationssymmetrischen Objekten wie Achsen und Wellen mittels Ultraschall auf betriebsbedingte Rissbildung treten prinzipbedingt neben den durch die jeweils gesuchten Materialfehler verursachten Anzeigen auch sogenannte Formanzeigen auf, die auf die jeweilige Geometrie des Prüfkörpers und die Anordnung der Prüfköpfe auf dem Prüfkörper zurückzuführen sind. Unter Verwendung einer Vorrichtung bzw. eines Verfahrens gemäß den nachfolgenden Ausführungsformen werden die Formanzeigen unabhängig von der Geometrie unterdrückt und die Aussagefähigkeit der Messverfahren gesteigert.

Gemäß einer ersten Ausführungsform wird ein Verfahren zur zerstörungsfreien Prüfung eines Prüfkörpers mittels Ultraschall unter Einsatz bzw. unter Verwendung eines Gruppenstrahler-Prüfkopfes mit einer Steuer- und Verarbeitungseinheit vorgeschlagen, das die folgenden Schritte umfasst:
(a) Platzieren des Gruppenstrahlers auf dem Prüfkörper in einer ersten Winkelposition δ₁, wobei die Winkelposition einer Rotationsposition eines Bezugspunktes in einer Umfangsrichtung des Prüfkörpers entspricht, so dass eine Vielzahl von Einschallrichtungen des Gruppenstrahlers in den Prüfkörper gerichtet ist.
(b) Betreiben des Gruppenstrahlers mit der Steuer- und Verarbeitungseinheit, sodass für die Vielzahl von Einschallrichtungen aus einem rückgestreuten Signal eine Vielzahl korrespondierender A-Bilder aufgenommen und gespeichert wird.
(c) Erzeugen und Speichern eines B-Bildes aus der Vielzahl von A-Bitdern je Winkelposition.
(d) Platzieren des Gruppenstrahlers entlang einer Umfangsrichtung in einer neuen Winkelposition δ₂. Dabei entspricht die neue Winkelposition δ₂ einer zumindest teilweisen Rotation des Prüfkörpers um eine Rotationsachse. Weiterhin kann dabei ein Zuordnen eines der zumindest teilweisen Rotation entsprechenden Winkelwertes zur neuen Winkelposition erfolgen.
(e) Wiederholen der Schritte b, c, d bis die neue Winkelposition im Wesentlichen einer vollständigen Rotation des Prüfkörpers um dessen Rotationsachse entspricht.
(f) Erzeugen eines Median-B-Bildes aus den erzeugten B-Bildem.
(g) Erzeugen von Differenzbildern, indem für jedes B-Bild der Betrag einer Differenz zwischen B-Bild und Median-B-Bild gebildet wird.
(h) Ermitteln eines Maximalwertes des rückgestrahlten Signals in jedem Differenzbild für jede Einschallrichtung, indem in jedem Differenzbild in Abhängigkeit von der Einschallrichtung in einem Schallwegerwartungsbereich eine Maximalwertbildung durchgeführt wird, und Eintragen der ermittelten Maximalwerte in ein erstes C-Bild repräsentiert durch winkelbezogene Datenreihen.
(i) Mitteln des ersten C-Bildes über alle sich aus den entsprechenden Winkelpositionen ergebenden Winkel δ_{1 bis} δₙ und Speichern des gemittelten ersten C-Bildes als winkelbezogene Datenreihe.
(k) Subtraktion der durch die Mittelung gewonnenen Datenreihe von jeder winkelbezogenen Datenreihe, Betragsbildung und Eintragen der erhaltenen Datenreihen in ein geometriekorrigiertes zweites C-Bild.

Der Prüfkörper ist insbesondere rotationssymmetrisch. In diesem Zusammenhang wird unter einem Winkelwert bei feststehendem Prüfkopf ein Rotationswinkel δ der Welle verstanden. Demgemäß wird unter einer Winkelposition, die Position des Prüfkopfes in einer Umfangsrichtung des Prüfkörpers beim besagten Rotationswinkel δ des Prüfkörpers verstanden.

Das Eintragen der erhaltenen Datenreihen in ein geometriekorrigiertes zweites C-Bild kommt dem Erzeugen des zweiten geometriekortigierten C-Bildes aus den winkelbezogenen Datenreihen gleich. Weiterhin wird im vorgenannten Schritt (f) zur Mittelwertbildung ein Algorithmus zur Ermittlung des Median (0,5-Quantil) eingesetzt, während in Schritt (i) eine klassische Mittelwertbildung mit arithmetischem oder geometrischem Mittelwert zum Einsatz kommt. Bei der Betragsbildung im Schritt (k) kann vom jeweiligen Messwert ein Wert abgezogen werden, der dem Mittelwert der in dieser Reihe aufgetretenen negativen Ergebnisse entspricht. Dazu wird die Summe aller negativen Ergebnisse der betreffenden Reihe durch die Anzahl der negativen Ergebnisse dieser Reihe in der gegebenen Winkelposition δ geteilt. Dadurch kann für spezielle Anwendungsfälle verhindert werden, dass ein einzelner negativer Wert oder mehrere einzelne negative Werte durch die einfache Betragsbildung überbewertet werden.

Mit anderen Worten ausgedrückt, kann das Verfahren einer reinen Betragsbildung gemäß Schritt k) um einen Algorithmus zur Unterscheidung von positiven und negativen Ergebnissen aus dem entstandenen Differenzbild ergänzt werden. Das hat den Vorteil, dass somit der Einfluss der Differenzbildung auf das tatsächlich "akustisch Wirksame" Signalverhalten der Echoanzeige berücksichtigt wird. Anstelle der einfachen Betragsbildung wird vom jeweiligen Messwert ein Wert abgezogen, der dem Mittelwert der in dieser Reihe aufgetretenen negativen Ergebnisse entspricht, also die Summe aller negativen Ergebnisse geteilt durch die Anzahl der negativen Ergebnisse einer Reihe.

Die sich aus der Anwendung des Verfahrens insgesamt ergebende Reduzierung der geometriebedingten Formanzeigen führt zu einem verbesserten Signal-Rausch-Abstand. Damit wird der Nachweis betriebsbedingter Schädigungen verbessert und die Zuverlässigkeit der Prüfaussage gesteigert. Das vorgeschlagenen Verfahren ist vorteilhafterweise geometrieunabhängig, erfordert mithin keine Vorkenntnis zur bzw. gesonderte Berücksichtigung der jeweiligen Geometrie eines zu prüfenden Rotationskörpers, z.B. einer Achse, einer Welle oder einer Walze.

Gemäß einer weiteren Ausführungsform umfasst das vorgeschlagene Verfahren weiterhin die Schritte:
(l) Ermitteln eines mittleren Signal-Rausch-Abstands für zumindest ein A-Bild;
(m) Anwenden einer Schwellwertfunktion auf das geometriekorrigierte zweite C-Bild; und
(n) Darstellen des dabei erhaltenen rauschreduzierten geometriekorrigierten zweiten C-Bildes als Prüfergebnis.

Sich daraus ergebenden Vorteile betreffen beispielsweise die unmittelbare Visualisierung des Prüfergebnisses in einem C-Bild, das weitestgehend frei von geometriebedingten Signalen und damit äußerst leicht zu interpretieren ist. Das Auffinden von Schädigungen wird somit erleichtert und beschleunigt, der Prüfdurchsatz je Prüfvorrichtung gesteigert, ohne dass dabei die Zuverlässigkeit der Prüfergebnisse leidet. Im Gegenteil, wird die Zuverlässigkeit der Prüfung sogar gesteigert.

Gemäß einer weiteren Ausführungsform des vorgeschlagenen Verfahrens ist eine Differenz benachbarter Winkelwerte im Schritt (e) vorzugsweise identisch und/oder die Abstände zwischen benachbarten Positionen des Gruppenstrahlers sind in beiden Umfangsrichtungen im Wesentlichen identisch. Beispielsweise können die unterschiedlichen Winkelpositionen des Prüfkopfes in einer Umfangsrichtung des Rotationskörpers symmetrisch zueinander sein. In diesem Zusammenhang wird unter einer Winkelposition bei feststehendem Prüfkopf ein Einschallwinkel δ bezogen auf eine für die jeweilige Messung festgelegte Null-Position der Welle (Ausgangsposition vor schrittweiser Rotation der Welle) verstanden.

Vorteile ergeben sich daraus, dass eine vorliegende Schädigung, etwa ein Riss, ein Einschluss oder eine andersartige Inhomogenität deutlich als solche dargestellt wird und die Intensität eines Signals proportional zur tatsächlichen Ausdehnung der vorliegenden Schädigung ist. Das erleichtert die Interpretation des Prüfergebnisses.

Gemäß einer weiteren Ausführungsform des vorgeschlagenen Verfahrens wird das rückgestrahlte Signal über einen Prüfkanal mit einer Auflösung von zumindest 12 Bit erfasst.

Daraus ergibt sich eine vorteilhaft hohe räumliche Auflösung des Prüfverfahrens.

Gemäß einer weiteren Ausführungsform ist der Prüfkörper, auf den das vorgeschlagene Verfahren angewendet wird, eine Vollwelle.

Gerade in Radsätzen von Schienenfahrzeugen kommen Vollwellen zum Einsatz und unterliegen somit typischerweise einer hohen Beanspruchung. Deshalb ist die zuverlässige Erfassung eventueller Schädigungen hier von besonderem Interesse.

Gemäß einer weiteren Ausführungsform wird Vorrichtung zur zerstörungsfreien Prüfung eines rotationssymmetrischen Prüfkörpers mittels Ultraschall vorgeschlagen, die einen Gruppenstrahler, eine Signalverarbeitungseinheit und eine Ausgabevorrichtung umfasst, wobei die Signalverarbeitungseinheit angepasst ist, die folgenden Schritte auszuführen:
- Speichern einer Vielzahl korrespondierender A-Bilder unter Zuordnung korrespondierender Winkelpositionen, wobei die Winkelpositionen jeweils einer Rotationsposition eines Bezugspunktes in einer Umfangsrichtung des Prüfkörpers entsprechen;
- Erzeugen und Speichern eines aus der ersten Vielzahl von A-Bildern erzeugten ersten B-Bildes;
- Zuordnen einer der zumindest teilweisen Rotation entsprechenden Winkelpositionen zur neuen Position;
- Wiederholen der Schritte b, c, d bis die effektive Summe der entsprechenden Winkelpositionen im Wesentlichen einer vollständigen Rotation des Prüfkörpers um die zentrale Rotationsachse entspricht;
- Erzeugen eines Median-B- Bildes aus allen erzeugten B-Bildern;
- Erzeugen von Differenzbildern, indem für jedes B-Bild der Betrag einer Differenz zwischen B-Bild und Mittelwert-Bild gebildet wird;
- Ermitteln eines Maximalwertes des rückgestrahlten Signals in jedem Differenzbild für jede Einschallrichtung und Erzeugen eines ersten C-Bildes repräsentiert durch winkelbezogene Datenreihen mit den ermittelten Maximalwerten;
- Mitteln des ersten C-Bildes über alle sich aus den Winkelpositionen ergebenden Winkel und Speichern des gemittelten ersten C-Bildes als winkelbezogene Datenreihe;
- Subtraktion der durch die Mittelung gewonnenen Datenreihe von jeder winkelbezogenen Datenreihe, Betragsbildung und Eintragen der erhaltenen Datenreihen in ein geometriekorrigiertes zweites C-Bild.

Unter dem "Wiederholen der Schritte b, c und d bis die effektive Summe der entsprechenden Winkelwerte im Wesentlichen einer vollständigen Rotation des Prüfkörpers um die zentrale Rotationsachse entspricht" wird in diesem Zusammenhang verstanden, dass einzelne Schrittweiten zur Einstellung der jeweiligen Winkelwerte vorzugsweise gleich sind, sodass die Abstände zwischen benachbarten Positionen des Gruppenstrahlers auf dem Prüfkörper in beiden Umfangsrichtungen im Wesentlichen gleich sind. Mit anderen Worten, wird entweder der Rotationskörper in festen Inkrementen um seine Rotationsachse gedreht, während der Gruppenstrahler seine Lage "beibehält" oder aber der Gruppenstrahler wird in im Wesentlichen gleichen Winkelabständen auf dem Rotationskörper in einer Umfangsrichtung bewegt, sodass die jeweils in einer Winkelposition eingestrahlten Schallsignale das Volumen des Prüfkörpers weitestgehend vollständig erfassen. Selbstredend wird der Grappenstrahlerprüfkopf jeweils mit einem geeigneten Koppelmittel, beispielsweise Wasser oder Öl auf die Oberfläche des Rotationskörpers aufgesetzt, sodass die Schallsignale effektiv eingekoppelt, und die Reflexe effektiv erfasst werden können.

Vorteile der Vorrichtung bestehen in gesteigerter Zuverlässigkeit und höherem Prüfdurchsatz je Anlage. Beispielsweise sind die in bekannten Verfahren verwendete Laufzeitblende und die Wahl der geometrieabhängigen Einstellparameter von den jeweiligen Fertigungstoleranzen der jeweiligen Radsatzwelle und von der Positioniergenauigkeit der Prüfköpfe auf der Radsatzwelle abhängig. Damit können Fehler, die in unmittelbarer Nähe von geometriebedingten Anzeigen liegen oder sogar innerhalb dieser liegen, typischerweise durch die Laufzeitblende und die bisher übliche Schwellwertbetrachtung nicht eindeutig erfasst werden. Die vorgeschlagene Vorrichtung und das darauf basierende Verfahren eliminieren diese Unsicherheiten.

Gemäß einer weiteren Ausführungsform der vorgeschlagenen Vorrichtung, ist dieselbe angepasst, die nachfolgenden Schritte auszuführen:
- Ermitteln eines mittleren Signal-Rausch-Abstands für zumindest ein A-Bild;
- Anwenden einer Schwellwertfunktion auf das geometriekorrigierte zweite C-Bild und
- Darstellen des dabei erhaltenen rauschreduzierten geometriekorrigierten zweiten C-Bildes als Prüfergebnis.

Diese Anpassung kann in der Implementierung einer die erforderlichen Rechenschritte ausführenden Software bzw. eines durch den Operator aktivierbaren Auswertealgorithmus mit anschließender grafischer Darstellung oder Ausgabe zumindest eines A-, B- und/oder C-Bildes bestehen. Vorteile dieser und weiterer Ausführungsformen bestehen beispielsweise in einer Erhöhung des Signal-Rausch-Abstandes von Ultraschallprüfungen an Eisenbahnradsatzwellen und einer damit verbundenen Verbesserung der Prüfaussage. Während der Prüfung ist weder eine Detailkenntnis der Geometrie der Welle im Prüfabschnitt noch die genaue Position des Ultraschallsensors auf der Welle notwendig. Prüfsysteme können deshalb technisch einfacher ausgeführt werden wobei gleichzeitig eine wesentliche Verbesserung der bildhaften Darstellung des Prüfergebnisses erzielt wird.

Gemäß einer weiteren Ausführungsform ist die Ausgabeeinheit ausgewählt unter einem Flachbildschirm, einem Pixelarray oder einem Drucker.

Für die unmittelbare Praxis bietet das den Vorteil, eine schnelle Interpretation der Prüfergebnisse zu ermöglichen und deren Dokumentation, beispielsweise in elektronischer oder in Papierform, zu erleichtern.

Gemäß einer weiteren Ausführungsform wird die Verwendung eines Ultraschall-Gruppenstrahlerptüfkopfes zur zerstörungsfreien Prüfung eines rotationssymmetrischen Prüfkörpers mittels einer Kombination oder Abfolge von zumindest fünf, der in den Ansprüchen 1 und 2 beschriebenen Verfahrensschritte a bis n vorgeschlagen, wobei der Prüfkörper ausgewählt ist unter: einer Achse, einer Walze, einer Welle, einer Fahrzeugantriebswelle, einer Eisenbahnradsatzwelle oder einem Halbzeug.

Vorteile dieser Verwendung, bzw. der Anwendung einer Kombination von mindestens fünf der vorgeschlagenen Verfahrensschritte (a) bis (n) wurden vorstehend bereits erläutert. Sie betreffen insbesondere eine genaue Lokalisierung von Defekten, sodass ausgehend von erhobenen Befunden geeignete Maßnahmen getroffen werden können. Beispielsweise kann eine defekte Achse, Walze, Welle, insbesondere eine Radsatzwelle, ausgesondert und ersetzt werden, oder ein Halbzeug genau dort geteilt oder zertrennt werden, wo ohnehin ein Defekt vorliegt. Ersteres steigert die Betriebssicherheit entsprechender Anlagen, Maschinen oder Fahrzeuge, letzteres verbessert die Effektivität des Materialeinsatzes, beispielsweise bei der Verarbeitung von Metall- oder Halbleiter-Halbzeugen.

Gemäß einer weiteren Ausführungsform wird ein Verfahren zur automatischen Ultraschallprüfung von Radsatzwellen, insbesondere von Eisenbahnradsatzwellen vorgeschlagen, wobei das Verfahren eine Kombination oder Abfolge von zumindest fünf, der in den Ansprüchen 1 und 2 beschriebenen Verfahrensschritte (a) bis (n) umfasst. Beispielhafte Vorteile dieser Ausführungsform wurden vorstehend bereits benannt.

Gemäß einer weiteren Ausführungsform wird vorgeschlagen, die oben bezeichneten Verfahrensschritte a bis n miteinander in einem Verfahren zur automatischen Ultraschallprüfung von Radsatzwellen zu kombinieren.

Vorteile ergeben sich für die Steigerung des Durchsatzes von Prüfanlagen bei erhöhter Zuverlässigkeit der erhobenen Befunde.

Gemäß einer weiteren Ausführungsform wird vorgeschlagen, eine geometrieunabhängige Reduzierung von Formanzeigen zu erzielen, indem das Verfahren gemäß den vorstehenden zwei Ausführungsformen automatisiert durchgeführt wird.

Gemäß einer weiteren Ausführungsform wird vorgeschlagen, dass eine Verbesserung des Signal Rausch Verhältnisses beim ultraschallbasierten Nachweis von betriebsbedingten Schädigungen eines Rotationskörpers, insbesondere einer Radsatzwelle erfolgt, indem das vorstehend beschriebene Verfahren bzw. die vorstehend beschriebene Vorrichtung genutzt wird.

Gemäß einer weiteren Ausführungsform ist das vorgeschlagene Verfahren dadurch gekennzeichnet, dass insbesondere eine Vergrößerung des prüfbaren Bereichs in Querschnittsübergängen der Radsatzwelle erfolgt.

Vorteilhafterweise ist mit dem vorgeschlagenen Verfahren der Nachweis von Schäden in der Nähe von oder in Querschnittsübergängen erleichtert. Diese Querschnittsübergänge waren auf Grund der durch sie bedingten (geometriebedingten) Signale und deren Überlagerung mit Schadenssignalen einer zerstörungsfreien Schadensanalyse bisher nur erschwert oder nur unzureichend zugänglich. Allerdings können gerade hier sicherheitsrelevante Schädigungen auftreten. Bei Anwendung der vorgeschlagenen Ausführungsformen oder der wie hier beschrieben geeigneten Kombination ihrer Merkmale sind derartige, bisher schwer erkennbare Schädigungen sicher nachweisbar. Daraus ergibt sich eine erhöhte Prüfsicherheit.

Gemäß einer weiteren Ausführungsform der vorgeschlagenen Vorrichtung bzw. den vorgeschlagenen Verfahren können die Formanzeigen durch die beschriebene Signalverarbeitung in ihrer Position bestimmt werden. Dazu wird eine Formanzeige in Beziehung zu ihrer für die Form des Prüfkörpers erwarteten Position gesetzt und eine eventuelle Abweichung der Formanzeige von der erwarteten Position als Indikator für eine unzureichende oder mangelhafte Kopplung des Gruppenstrahler-Prüfkopfes zum Prüfkörper benutzt. Dabei kann der komplette Dynamikbereich des digitalisierten Ultraschallsignals bewertet werden.

Vorteile ergeben sich daraus, dass die Signale ohne zusätzlichen Aufwand zur Ankoppelkontrolle genutzt werden können. Das sichert eine unverändert hohe Zuverlässigkeit der erhobenen Prüfbefunde während des gesamten Prüfvorganges.

Die vorstehend beschriebenen Ausführungsformen können beliebig miteinander kombiniert werden. Dabei können mehrere Ausführungsformen ausgewählt und miteinander kombiniert werden. Ebenso können alle Ausführungsformen unter Weglassen einzelner oder mehrerer Ausführungsformen oder Weglassen spezifischer Merkmale miteinander kombiniert werden.

Gemäß bevorzugten Ausführungsformen werden somit die mit einem Ultraschall-Phased-Array-Prüfkopf aufgenommenen Ultraschallsignale bezogen auf die eingestellten Einschallwinkel α und die Rotationsposition δ der Welle als gleichgerichtetes A-Bild gespeichert. Anschließend wird für jede Rotationsposition DELTA ein Winkel B-Bild erzeugt. Aus allen Winkel B-Bildern für alle Rotationspositionen DELTA wird mit Hilfe eines Median-Algorithmus ein Mittelwertbild, auch als Median-B-Bild bezeichnet, erzeugt.

Aus jedem Winkel B-Bild wird durch Abziehen des Median-B-Bildes und anschließende Betragbildung ein Differenzbild erzeugt. In jedem Differenzbild wird in Abhängigkeit vom Einschallwinkel α in einem Schallwegerwartungsbereich, der einer groben Angabe des Wellendurchmessers entspricht, eine Maximalwertbildung durchgeführt. Die Maximalwerte werden zum Erstellen eines C-Bildes verwendet. In einem nächsten Schritt wird das C-Bild über alle Winkel δ gemittelt.

Die durch die Mittelung gewonnene Datenreihe wird von jeder winkelbezogenen Datenreihe abgezogen. Im resultierenden C-Bild wird so jegliche geometriebedingte Anzeige in ihrer Amplitude deutlich reduziert. Dadurch wird das Signal/Rausch-Verhältnis für das von einer Irregularität, bzw. einer Schädigung ausgehende Messsignal gegenüber herkömmlichen Verfahren gesteigert.

Über eine Schwellwertfunktion, die auf das gesamte resultierende C-Bild angewendet wird, kann das Prüfergebnis ermittelt werden. Die Schwellwerte können dabei automatisch von dem aus den aufgenommenen A-Bildern ermittelten Signal-Rausch-Abstand abgeleitet werden. Für die Funktion des Algorithmus ist eine Digitalisierung der Messdaten mit einer Auflösung von mindestens 12 Bit pro Prüfkanal zweckmäßig.

Dabei wird unter einem A-Scan oder einem A-Bild eine Amplituden-Zeitdarstellung, unter einem B-Scan oder einem B-Bild eine Laufzeit-Weg Darstellung und unter einem C-Scan oder einem C-Bild eine daraus abgeleiteten zweidimensionale Abbildung verstanden.

Im A-Bild *A (δ, x₀, y₀, t)* wird die Amplitude in einem einzelnen am Rotationswinkel *δ* der Welle liegenden Prüfpunkt (*x₀, y₀*) zum Zeitpunkt *t* erfasst. Sie liefert Aussagen über die Tiefe einer Störung, wenn der Scan im Reflexionsmodus vorgenommen wird.

Ein B-Bild entspricht einer kontinuierlichen Aufnahme mehrerer auf einer y-Achse liegender A-Scans, die im Falle der Verwendung eines Phasenarray-Prüfkopfes unter verschiedenen Einstrahlwinkeln α vorgenommen werden. Dementsprechend repräsentierte die Abszisse eines B-Scans die Position entlang der Scan-Richtung, während die Tiefeninformation auf der Ordinate abgetragen ist.

Ein C- Bild zeigt die untersuchte Probe aus einer Draufsicht in der Ebene des interessierenden Defektes parallel zur Oberfläche. Durch den Einsatz der beschriebenen Signalverarbeitungsalgorithmen wird eine deutliche Reduzierung von Ultraschallformanzeigen erreicht.

Das vorgeschlagene Verfahren ist geometrieunabhängig und vorzugsweise auf rotationssymmetrische Prüfkörper, wie beispielsweise Achsen und Wellen, insbesondere Radsatzwellen von Schienenfahrzeugen oder für die Qualitätskontrolle von Walzen anwendbar. Jedoch können mit dem vorgeschlagenen Verfahren auch andere rotationssymmetrische Objekte, insbesondere langgestreckte Vollkörper mit wechselndem Durchmesser geprüft werden. Anwendungen umfassen beispielsweise Halbzeuge, wie z.B. Ingots.

Zusammenfassend wird ein Verfahren und eine Vorrichtung sowie deren Verwendung zur zerstörungsfreien Prüfung eines Prüfkörpers, insbesondere eines rotationssymmetrischen Prüfkörpers, mittels Ultraschall unter Einsatz eines Gruppenstrahler-Prüfkopfes mit einer Steuer- und Verarbeitungseinheit vorgeschlagen. Das Verfahren umfasst die Schritte: (a) Platzieren des Gruppenstrahlers auf dem Prüfkörper in einer ersten Winkelposition, sodass eine Vielzahl von Einschallrichtungen des Gruppenstrahlers in den Prüfkörper gerichtet ist; (b) Betreiben des Gruppen-strahlers mit der Steuer- und Verarbeitungseinheit, sodass für die Vielzahl von Einschallrichtungen aus einem rückgestreuten Signal eine Vielzahl korrespondierender A-Bilder aufgenommen und gespeichert wird; (c) Erzeugen und Speichern eines B-Bildes aus der Vielzahl von A-Bildern je Winkelposition; (d) Platzieren des Gruppenstrahlers entlang einer Umfangsrichtung in einer neuen Winkelposition; (e) Wiederholen der Schritte b, c, d bis die neue Winkelposition im Wesentlichen einer vollständigen Rotation des Prüfkörpers entspricht; (f) Erzeugen eines Median-B-Bildes aus den erzeugten B-Bildern; (g) Erzeugen von Differenzbildern, indem für jedes B-Bild der Betrag einer Differenz zwischen B-Bild und Median-B-Bild gebildet wird; (h) Ermitteln eines Maximalwertes des rückgestrahlten Signals in jedem Differenzbild für jede Einschallrichtung und Eintragen der ermittelten Maximalwerte in ein erstes C-Bild; (i) Mitteln des ersten C-Bildes über alle sich aus den entsprechen-den Winkelwerten ergebenden Winkel und Speichern des gemittelten ersten C-Bildes als winkelbezogene Datenreihen; (k) Subtraktion der durch die Mittelung gewonnenen Datenreihe von jeder winkelbezogenen Datenreihe, Betragsbildung und Eintragen der erhaltenen Datenreihen in ein geometriekorrigiertes zweites C-Bild.

Die vorliegende Erfindung wurde anhand von Ausführungsbeispielen erläutert. Diese Ausführungsbeispiele sollten keinesfalls als einschränkend für die vorliegende Erfindung verstanden werden. Die nachfolgenden Ansprüche stellen einen ersten, nicht bindenden Versuch dar, die Erfindung allgemein zu definieren.

## Patentansprüche

1. Verfahren zur zerstörungsfreien Prüfung eines Prüfkörpers, insbesondere eines rotationssymmetrischen Prüfkörpers, mittels Ultraschall unter Einsatz eines Gruppenstrahler-Prüfkopfes mit einer Steuer- und Verarbeitungseinheit, umfassend die Schritte:
a) Platzieren des Gruppenstrahlers auf dem Prüfkörper in einer ersten Winkelposition, wobei die Winkelposition einer Rotationsposition eines Bezugspunktes in einer Umfangsrichtung des Prüfkörpers entspricht, so dass eine Vielzahl von Einschallrichtungen des Gruppenstrahlers in den Prüfkörper gerichtet ist;
b) Betreiben des Gruppenstrahlers mit der Steuer- und Verarbeitungseinheit, sodass für die Vielzahl von Einschallrichtungen aus einem rückgestreuten Signal eine Vielzahl korrespondierender A-Bilder aufgenommen und gespeichert wird;
c) Erzeugen und Speichern eines B-Bildes aus der Vielzahl von A-Bildern je Winkelposition;
d) Platzieren des Gruppenstrahlers entlang einer Umfangsrichtung in einer neuen Winkelposition;
e) Wiederholen der Schritte b, c, d bis die neue Winkelposition im Wesentlichen einer vollständigen Rotation des Prüfkörpers entspricht; **dadurch gekennzeichnet, dass** es die folgenden Schritte umfasst:
f) Erzeugen eines Median-B-Bildes aus den erzeugten B-Bildern;
g) Erzeugen von Differenzbildern, indem für jedes B-Bild der Betrag einer Differenz zwischen B-Bild und Median-B-Bild gebildet wird;
h) Ermitteln eines Maximalwertes des rückgestrahlten Signals in jedem Differenzbild für jede Einschallrichtung, indem in jedem Differenzbild in Abhängigkeit von der Einschallrichtung in einem Schallwegerwartungsbereich eine Maximalwertbildung durchgeführt wird, und Eintragen der ermittelten Maximalwerte in ein erstes C-Bild repräsentiert durch winkelbezogene Datenreihen;
i) Mitteln des ersten C-Bildes über alle sich aus den entsprechenden Winkelpositionen ergebenden Winkel und Speichern des gemittelten ersten C-Bildes als winkelbezogene Datenreihe;
j) Subtraktion der durch die Mittelung gewonnenen Datenreihe von jeder winkelbezogenen Datenreihe, Betragsbildung und Eintragen der erhaltenen Datenreihen in ein geometriekorrigiertes zweites C-Bild.

2. Verfahren gemäß Anspruch 1, weiterhin umfassend:
k) Ermitteln eines mittleren Signal-Rausch-Abstands für zumindest ein A-Bild,
l) Anwenden einer Schwellwertfunktion auf das geometriekorrigierte zweite C-Bild; und
m) Darstellen des dabei erhaltenen rauschreduzierten geometriekorrigierten zweiten C-Bildes als Prüfergebnis.

3. Verfahren nach Anspruch 1, wobei eine Differenz benachbarter Winkelpositionen im Schritt e vorzugsweise identisch ist und/oder die Abstände zwischen benachbarten Positionen des Gruppenstrahlers in beiden Umfangsrichtungen im Wesentlichen identisch sind.

4. Verfahren gemäß einem der Ansprüche 1 bis 3, wobei das rückgestrahlte Signal über einen Prüfkanal mit einer Auflösung von zumindest 12 Bit erfasst wird.

5. Verfahren gemäß zumindest einem der Ansprüche 1 bis 4, wobei der Prüfkörper eine Vollwelle ist.

6. Vorrichtung zur zerstörungsfreien Prüfung eines rotationssymmetrischen Prüfkörpers mittels Ultraschall, umfassend einen Gruppenstrahler, eine Signalverarbeitungseinheit und eine Ausgabevorrichtung, wobei die Signalverarbeitungseinheit angepasst ist, die folgenden Schritte auszuführen:
a) Speichern einer Vielzahl korrespondierender A-Bilder unter Zuordnung korrespondierender Winkelpositionen, wobei die Winkelpositionen jeweils einer Rotationsposition eines Bezugspunktes in einer Umfangsrichtung des Prüfkörpers entsprechen;
b) Erzeugen und Speichern eines aus der ersten Vielzahl von A-Bildern erzeugten ersten B-Bildes;
c) Zuordnen einer der zumindest teilweisen Rotation entsprechenden Winkelposition zur neuen Position;
d) Wiederholen der Schritte b, c, d bis die effektive Summe der entsprechenden Winkelpositionen im Wesentlichen einer vollständigen Rotation des Prüfkörpers um die zentrale Rotationsachse entspricht;
**dadurch gekennzeichnet, dass** sie eingerichtet ist, die folgende Schritte auszuführen:
e) Erzeugen eines Median-B- Bildes aus allen erzeugten B-Bildern;
f) Erzeugen von Differenzbildern, indem für jedes B-Bild der Betrag einer Differenz zwischen B-Bild und Mittelwert-Bild gebildet wird;
g) Ermitteln eines Maximalwertes des rückgestrahlten Signals in jedem Differenzbild für jede Einschallrichtung und Erzeugen eines ersten C-Bildes repräsentiert durch winkelbezogene Datenreihen mit den ermittelten Maximalwerten;
h) Mitteln des ersten C-Bildes über alle sich aus den Winkelpositionen ergebenden Winkel und Speichern des gemittelten ersten C-Bildes als winkelbezogene Datenreihe;
i) Subtraktion der durch die Mittelung gewonnenen Datenreihe von jeder winkelbezogenen Datenreihe, Betragsbildung und Eintragen der erhaltenen Datenreihen in ein geometriekorrigiertes zweites C-Bild.

7. Vorrichtung gemäß Anspruch 6, wobei die Signalverarbeitungseinheit weiterhin angepasst ist, die nachfolgenden Schritte auszuführen:
k) Ermitteln eines mittleren Signal-Rausch-Abstands für zumindest ein A-Bild;
l) Anwenden einer Schwellwertfunktion auf das geometriekorrigierte zweite C-Bild und
m) Darstellen des dabei erhaltenen rauschreduzierten geometriekorrigierten zweiten C-Bildes als Prüfergebnis.

8. Vorrichtung gemäß Anspruch 6 oder 7, wobei die Ausgabeeinheit ausgewählt ist unter: einem Flachbildschirm, einem Pixelarray oder einem Drucker.

9. Verwendung eines Ultraschall-Gruppenstrahlerprüfkopfes zur zerstörungsfreien Prüfung eines rotationssymmetrischen Prüfkörpers mittels des Verfahrens gemäß Anspruch 1 wobei der Prüfkörper ausgewählt ist unter: einer Achse, einer Walze, einer Welle, einer Fahrzeugantriebswelle, einer Eisenbahnradsatzwelle, einem Halbzeug.

10. Verfahren zur automatischen Ultraschallprüfung von Radsatzwellen, insbesondere von Eisenbahnradsatzwellen, **dadurch gekennzeichnet, dass** es das Verfahren gemäß Anspruch 1 umfasst.

11. Verfahren gemäß einem der Ansprüche 1 bis 5 oder 10, wobei eine Formanzeige in Beziehung zu einer für die Form des Prüfkörpers erwarteten Position gesetzt wird und eine Abweichung der Formanzeige von der erwarteten Position als Indikator einer mangelhaften Kopplung des Gruppenstrahler-Prüfkopfes zum Prüfkörper dient.

## Claims

1. A method for the non-destructive testing of a test body, in particular of a rotationally symmetric test body, by means of ultrasound using a phased array test probe with a control and processing unit, comprising the following steps:
a) placing the phased array on the test body in a first angular position, wherein the angular position corresponds to a rotation position of a reference point in a circumferential direction of the test body, so that a plurality of insonification directions of the phased array is directed into the test body;
b) operating the phased array with the control and processing unit, so that a plurality of corresponding A-images is recorded and stored from a backscattered signal for the plurality of insonification directions;
c) generating and storing a B-image from the plurality of A-images per angular position;
d) placing the phased array along a circumferential direction in a new angular position;
e) repeating the steps b, c, d until the new angular position substantially corresponds to a full rotation of the test body; **characterized in that** it comprises the following steps:
f) generating a median B-image from the generated B-images;
g) generating difference images by the absolute value of a difference between the B-image and the median B-image being generated for each B-image;
h) determining a maximum value of the reflected signal in each difference image for each insonification direction by a maximum value generation being carried out, in each difference image, depending on the insonification direction in an expected region of the sound path, and plotting the determined maximum values into a first C-image, represented by angle-related data series;
i) calculating the mean of the first C-image over all angles resulting from the corresponding angular positions and storing the mean first C-image as an angle-related data series;
j) subtraction of the data series obtained from the mean calculation from each angle-related data series, absolute-value generation, and plotting the obtained data series into a geometry-corrected second C-image.

2. The method according to claim 1, further comprising:
k) determining a mean signal-to-noise ratio for at least one A-image,
l) applying a threshold function to the geometry-corrected second C-image; and
m) displaying the noise-reduced, geometry-corrected second C-image obtained in the process as the test result.

3. The method according to claim 1, wherein a difference of adjacent angular positions in step e is preferably identical and/or the distances between adjacent positions of the phased array are substantially identical in both circumferential directions.

4. The method according to any one of the claims 1 to 3, wherein the reflected signal is captured via a test channel with a resolution of at least 12 bit.

5. The method according to at least one of the claims 1 to 4, wherein the test body is a solid shaft.

6. A device for the non-destructive testing of a rotationally symmetric test body by means of ultrasound, comprising a phased array, a signal processing unit and an output device, the signal processing unit being adapted to carry out the following steps:
a) storing a plurality of corresponding A-images while assigning corresponding angular positions, wherein the angular positions each correspond to a rotation position of a reference point in a circumferential direction of the test body;
b) generating and storing a first B-image generated from the first plurality of A-images;
c) assigning an angular position corresponding to the at least partial rotation to the new position;
d) repeating the steps b, c, d until the effective sum of the corresponding angular positions substantially corresponds to a full rotation of the test body about the central rotation axis;
**characterized in that** it is configured for carrying out the following steps:
e) generating a median B-image from all generated B-images;
f) generating difference images by the absolute value of a difference between the B-image and the mean image being generated for each B-image;
g) determining a maximum value of the reflected signal in each difference image for each insonification direction and generating a first C-image, represented by angle-related data series, with the determined maximum values;
h) calculating the mean of the first C-image over all angles resulting from the angular positions and storing the mean first C-image as an angle-related data series;
i) subtraction of the data series obtained from the mean calculation from each angle-related data series, absolute-value generation, and plotting the obtained data series into a geometry-corrected second C-image.

7. The device according to claim 6, wherein the signal processing unit is further adapted to carry out the following steps:
k) determining a mean signal-to-noise ratio for at least one A-image;
l) applying a threshold function to the geometry-corrected second C-image; and
m) displaying the noise-reduced, geometry-corrected second C-image obtained in the process as the test result.

8. The device according to claim 6 or 7, wherein the output unit is selected from amongst a flat screen display, a pixel array or a printer.

9. A use of a phased array test probe for the non-destructive testing of a rotationally symmetric test body by means of the method according to claim 1, wherein the test body is selected from amongst an axle, a roller, a shaft, a vehicle drive shaft, a railway wheel set shaft, a semi-finished product.

10. A method for the automatic ultrasonic testing of wheel set shafts, particularly of railway wheel set shafts, **characterized in that** comprises the method according to claim 1.

11. The method according to any one of the claims 1 to 5 or 10, wherein a shape indication is related to a position expected for the shape of the test body, and a deviation of the shape indication from the expected position serves as an indicator for an inadequate coupling of the phased array test probe to the test body.

## Revendications

1. Procédé de contrôle non destructif d'une éprouvette, en particulier d'une éprouvette à symétrie de révolution, au moyen d'ultrasons en utilisant un palpeur phased array ayant une unité de commande et de traitement, comprenant les étapes consistant à:
a) placer le palpeur phased array sur l'éprouvette dans une première position angulaire, la position angulaire correspondant à une position de rotation d'un point de référence dans une direction circonférentielle de l'éprouvette, de sorte qu'une pluralité de directions d'irradiation acoustique du palpeur phased array soit dirigée dans l'éprouvette;
b) faire fonctionner le palpeur phased array avec l'unité de commande et de traitement, de sorte que, pour ladite pluralité de directions d'irradiation acoustique, une pluralité d'images A correspondantes soit prise à partir d'un signal rétrodiffusé et soit stockée;
c) générer et stocker une image B à partir de la pluralité d'images A par position angulaire;
d) placer le palpeur phased array le long d'une direction circonférentielle dans une nouvelle position angulaire;
e) répéter les étapes b, c, d jusqu'à ce que la nouvelle position angulaire corresponde pour l'essentiel à une rotation complète de l'éprouvette;
**caractérisé par le fait qu'**il comprend les étapes suivantes consistant à:
f) générer une image B médiane à partir des images B générées;
g) générer des images de différence en formant, pour chaque image B, la valeur absolue d'une différence entre l'image B et l'image B médiane;
h) déterminer une valeur maximale du signal réfléchi dans chaque image de différence pour chaque direction d'irradiation acoustique en réalisant, dans chaque image de différence, en fonction de la direction d'irradiation acoustique, dans une zone attendue de trajet du son, une formation de valeur maximale, et inscrire les valeurs maximales déterminées dans une première image C représentée par des séries de données relatives à l'angle;
i) faire la moyenne de la première image C sur tous les angles résultant des positions angulaires correspondantes, et stocker la première image C moyennée en tant que série de données relative à l'angle;
j) soustraire la série de données obtenue en faisant la moyenne, de chaque série de données relative à l'angle, former la valeur absolue et inscrire les séries de données obtenues dans une deuxième image C corrigée en géométrie.

2. Procédé selon la revendication 1, comprenant en outre:
k) déterminer un rapport moyen signal sur bruit pour au moins une image A,
l) appliquer une fonction de seuil à la deuxième image C corrigée en géométrie; et
m) représenter, en tant que résultat de contrôle, la deuxième image C corrigée en géométrie et à bruit réduit qui est obtenue lors de cela.

3. Procédé selon la revendication 1, dans lequel une différence de positions angulaires adjacentes à l'étape e est de préférence identique et/ou les distances entre des positions adjacentes du palpeur phased array sont pour l'essentiel identiques dans les deux directions circonférentielles.

4. Procédé selon l'une quelconque des revendications 1 à 3, dans lequel le signal réfléchi est détecté via un canal de contrôle avec une résolution d'au moins 12 bits.

5. Procédé selon l'une au moins des revendications 1 à 4, dans lequel ladite éprouvette est un arbre plein.

6. Dispositif de contrôle non destructif d'une éprouvette à symétrie de révolution, au moyen d'ultrasons, comprenant un palpeur phased array, une unité de traitement de signaux et un dispositif de sortie, dans lequel ladite unité de traitement de signaux est adaptée pour mettre en oeuvre les étapes suivantes consistant à:
a) stocker une pluralité d'images A correspondantes en associant des positions angulaires correspondantes, dans lequel les positions angulaires correspondent chacune à une position de rotation d'un point de référence dans une direction circonférentielle de l'éprouvette;
b) générer et stocker une première image B générée à partir de la première pluralité d'images A;
c) associer, à la nouvelle position, une position angulaire correspondant à la rotation au moins partielle;
d) répéter les étapes b, c, d jusqu'à ce que la somme effective des positions angulaires respectives corresponde pour l'essentiel à une rotation complète de l'éprouvette autour de l'axe central de rotation;
**caractérisé par le fait qu'**il est agencé pour mettre en oeuvre les étapes suivantes consistant à:
e) générer une image B médiane à partir de l'ensemble des images B générées;
f) générer des images de différence en formant, pour chaque image B, la valeur absolue d'une différence entre l'image B et l'image médiane;
g) déterminer une valeur maximale du signal réfléchi dans chaque image de différence pour chaque direction d'irradiation acoustique, et générer une première image C représentée par des séries de données relatives à l'angle, avec les valeurs maximales déterminées;
h) faire la moyenne de la première image C sur tous les angles résultant des positions angulaires, et stocker la première image C moyennée en tant que série de données relative à l'angle;
i) soustraire la série de données obtenue en faisant la moyenne, de chaque série de données relative à l'angle, former la valeur absolue et inscrire les séries de données obtenues dans une deuxième image C corrigée en géométrie.

7. Dispositif selon la revendication 6, dans lequel l'unité de traitement de signaux est en outre adaptée pour mettre en oeuvre les étapes suivantes consistant à :
k) déterminer un rapport moyen signal sur bruit pour au moins une image A;
l) appliquer une fonction de seuil à la deuxième image C corrigée en géométrie, et
m) représenter, en tant que résultat de contrôle, la deuxième image C corrigée en géométrie et à bruit réduit obtenue lors de cela.

8. Dispositif selon la revendication 6 ou 7, dans lequel ladite unité de sortie est choisie parmi: un écran plat, une matrice de pixels ou une imprimante.

9. Utilisation d'un palpeur phased array à ultrasons pour le contrôle non destructif d'une éprouvette à symétrie de révolution, au moyen du procédé selon la revendication 1, dans lequel l'éprouvette est choisie parmi: un axe, un rouleau, un arbre, un arbre d'entraînement de véhicule, un arbre d'essieu monté ferroviaire, un produit semi-fini.

10. Procédé de contrôle par ultrasons automatique d'arbres d'essieux montés, en particulier d'arbres d'essieux montés ferroviaires, **caractérisé par le fait qu'**il comprend le procédé selon la revendication 1.

11. Procédé selon l'une quelconque des revendications 1 à 5 ou 10, dans lequel on met un indicateur de forme par rapport à une position attendue pour la forme de l'éprouvette, et un écart de l'indicateur de forme par rapport à la position attendue sert d'indicateur d'un mauvais couplage du palpeur phased array par rapport à l'éprouvette.
